# EUROPEAN PATENT SPECIFICATION

(11) **EP 4 291 415 B1**
(45) Date of publication and mention of the grant of the patent: **10.12.2025**
(21) Application number: 22707587.6
(22) Date of filing: 10.02.2022
(51) Int. Cl.: B42D 25/305, B42D 25/328, B42D 25/36, B42D 25/373, B42D 25/455, B42D 25/46, B42D 25/47, B42D 25/475, B32B 27/10, B32B 29/06

(54) **SHEET ASSEMBLY FOR FORMING ONE OR MORE CARDS**
BLATTANORDNUNG ZUR HERSTELLUNG EINER ODER MEHRERER KARTEN
ENSEMBLE DE FEUILLES PERMETTANT DE FORMER UNE OU PLUSIEURS CARTES

(30) Priority: 10.02.2021 US 202163147898 P
(43) Date of publication of application: 20.12.2023
(73) Proprietor: Illinois Tool Works Inc., Glenview, IL 60025 (US)
(72) Inventor: SANGKARATANA, Suwit, John, Glenview, IL 60025 (US); KORSON, Robert, Michael, Glenview, IL 60025 (US)
(74) Representative: HGF
(86) International application number: PCT/US2022/070599
(87) International publication number: WO 2022/174236

(56) References cited:
- WO-A1-2011/096614
- DE-A1- 102004 062 437
- US-A- 2 374 214

## Description

### BACKGROUND

### Technical Field.

The subject matter described herein relates to multi-layer sheet assemblies that can be cut into smaller cards, such as identification cards, financial transaction cards (e.g., credit cards, debit cards, gift cards, or the like), or other types of cards. Discussion of Art.

Cards are used for a variety of purposes, such as identification or security, financial transactions, etc. With the trend toward increased environmental concerns and "green" products, some manufacturers have turned to making biodegradable cards. These cards may be formed from paper layers held together by biodegradable polymers. But these known biodegradable cards are not durable and may not withstand repeated usage, humid environments, or the like. For example, some of these cards suffer from delamination that renders the card unusable. Some higher-end financial transaction cards are made from or include metals to provide a heavier card, which can be desirable by customers. But inclusion of these types of materials can make it harder or more costly to recycle the cards.

WO 2011/096614 A1 discloses the preamble of claim 1.

### BRIEF DESCRIPTION

The invention is defined in the appended claims.

### BRIEF DESCRIPTION OF THE DRAWINGS

The inventive subject matter may be understood from reading the following description of non-limiting embodiments, with reference to the attached drawings, wherein below:
FIG. 1 illustrates a perspective view of one embodiment of a multi-layer sheet assembly;
FIG. 2 illustrates a cross-sectional view of a card shown in FIG. 1 along line 2-2 in FIG. 1 according to one embodiment;
FIG. 3 illustrates a cross-sectional view of a card shown in FIG. 1 along line 2-2 in FIG. 1 according to one embodiment;
FIG. 4 illustrates a cross-sectional view of a card shown in FIG. 1 along line 2-2 in FIG. 1 according to one embodiment;
FIG. 5 illustrates a cross-sectional view of a card shown in FIG. 1 along line 2-2 in FIG. 1 according to one embodiment;
FIG. 6 illustrates an exploded view of a card according to one embodiment; and
FIG. 7 illustrates a flowchart of a method for forming a sheet assembly that can be cut into smaller cards according to one embodiment.

### DETAILED DESCRIPTION

The inventive subject matter described herein provides multi-layer sheet assemblies from which several cards can be cut. The cards can be shaped for use as identification cards, security cards, financial transaction cards, etc. The sheet assemblies can be formed from materials that include resin-impregnated paper. The resin may be a petroleum-based resin or according to the invention a biobased resin. A biobased resin may include resins formed of renewable or biological resources such as plants. A biobased resin may include resins that are not petroleum-based resins. The resins may be thermoplastic or thermoset.

The cards include high density particles to enhance the properties of the card and provide the card with a weight and feel of a metal or heavy impact card. The high-density particles are provided to make the cards electrically nonconductive so that the cards are not subject to electrostatic discharge. The cards may be manufactured using current equipment used to make plastic cards. The cards may be more durable than current plastic cards and may be usable for up to five or more years. The cards may be, for example, financial transaction cards, identification cards, key cards, access cards, or security cards.

The sheet assembly may also be used to form other products. For example, the sheet assembly may be used to form decorative laminates for countertops, tabletops, furniture surfaces, and flooring.

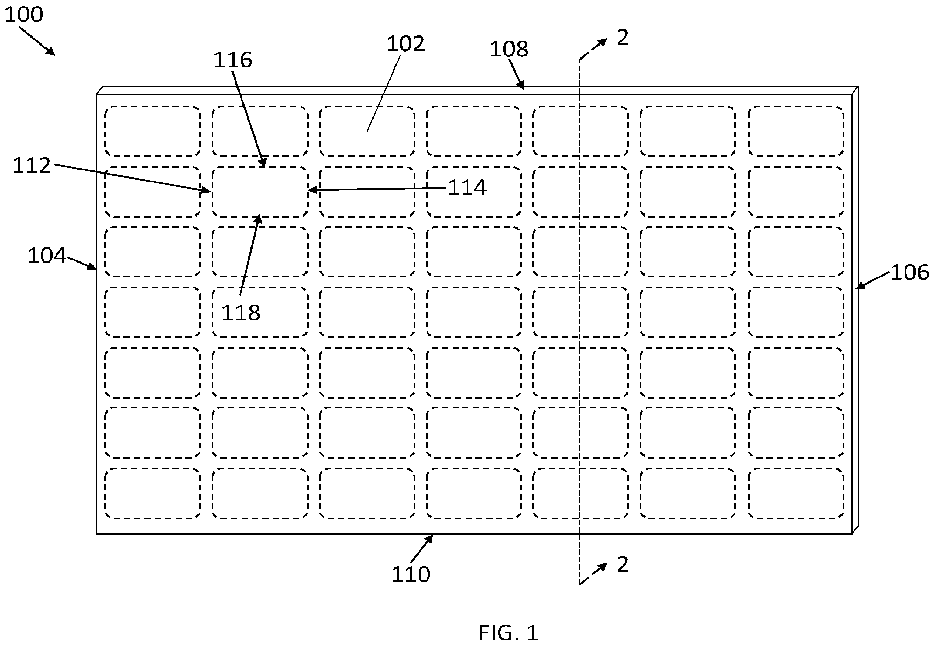

FIG. 1 illustrates a perspective view of one embodiment of a multi-layer sheet assembly 100. The sheet assembly 100 can be large enough to cut several cards 102 from the sheet assembly. These cards 102 may be identification cards (e.g., drivers' licenses, work identification cards, etc.), financial transaction cards (e.g., credit cards, debit cards, gift cards, etc.), or the like. In one embodiment, each of the cards 102 has a shape and size defined by the ISO/IEC 7810 ID-1 standard. Alternatively, the cards 102 may have a different shape and/or size. The sheet assembly 100 may be large enough to cut several (e.g., sixty-three or another number) of the cards 102 from the sheet assembly 100. For example, the sheet assembly 100 may have a surface area on each side of the sheet assembly 100 that is at least 2,911 square centimeters.

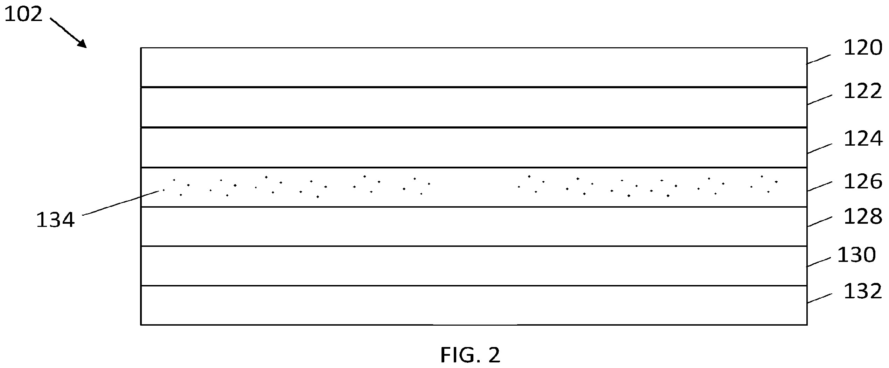

FIG. 2 illustrates a cross-sectional view of the card shown in FIG. 1 along line 2-2 in FIG. 1. The card includes an upper clear overlay layer 120 and a lower clear overlay layer 132. The upper and lower clear overlay layers may be formed of a polymer. In another embodiment, the upper and lower clear overlay layers may be formed of paper impregnated with a resin. The resin-impregnated paper may be saturated with the resin. The resin-impregnated paper may have an inter-penetrating network of paper fibers and polymers of the resin. The paper-impregnated resin may have the resin dispersed throughout or embedded within the paper. The resin-impregnated paper may have the resin blended with the paper. The resin may be uniformly or homogenously provided in the resin-impregnated paper.

The resin may include a biobased resin. A biobased resin may be a resin that is formed of a biological resource(s), for example plants. A biobased resin may be a resin that is not petroleum-based. The resin may also include petroleum-based resin(s). For example, the resin-impregnated paper may be impregnated with a resin that is 40% biobased resin and the remainder petroleum-based resin. According to other examples, the resin may include up to 50%, up to 60%, up to 70%, up to 80%, up to 90%, or up to 100% biobased resin, with a remainder petroleum-based resin. According to another example, the resin-impregnated paper may include a resin that is 40% - 70% biobased resin.

Biobased resins that may be in the resin-impregnated paper may include biobased polymers formed with cellulosics, lignocellulosics, natural fibers, starches, polysaccharides, fats and oils, protein, and/or alginates. Examples of natural fibers may include kenaf, sisal, jute, hemp, and flax. Examples of starches may include corn, potato, or tapioca starch. Examples of polysaccharides may include pectin, chitin, levan, or pullalan. Examples of fats and oils may include soybeans, lesquerella, and rapeseed. Examples of proteins may include casein. zein, or soy protein.

Biobased polymers that may be in the resin-impregnated paper may include polylactic acid (PLA), polyhydroxyalkanoates (PHA), polybutylene adipate terephthalate (PBAT), polybutylene succinates (PBS), polyethylene (PE); polypropylene (PP), polyethylene terephthalate (PET), polyurethanes (PUR), ethylene propylene diene monomer (EPDM), polyvinylchloride (PVC), polymethyl methacrylate (PMMA), polyethylene furanoate (PEF), polytrimethylene furandicarboxylate (PTF), polytrimethylene terephthalate (PTT), styrene-butadiene rubber (SBR), polybutylene terephthalate (PBT), acrylonitrile butadiene styrene (ABS), and polyamides (PA), aliphatic polycarbonates (APC), and cellulose acetate (CA).

Biobased films that may be used in the sheet assembly may be formed of biobased polymers discussed above. For example, a biobased film that may be used in the sheet assembly may be a biobased polycarbonate film formed of a biobased polycarbonate such as DURABIO^{™} from Mitsubishi Chemical or MAKROFOL^{®} EC from Covestro Deutschland AG. For example, a biobased film that may be used in the sheet assembly may be a cellulose-based polymer such as TREVA^{™} or a biobased copolyester such as TRITAN^{™} from Eastman Chemical Company.

The paper may be a phenolic paper. The paper may be impregnated up to about 50% with the resin. The paper may be impregnated with less than about 50% of resin including petroleum-based resin. Other resins that may be used to impregnate the paper include melamine, formaldehyde, and phenolic resins.

The card may further include an upper print layer 122 and a lower print layer 130. The upper print layer 122 and the lower print layer 130 may be formed from a material that is capable of being printed upon by inks to form indicia on a visible surface (e.g., top or front surface) of the upper print layer 122 and a visible surface (e.g., bottom or back surface) of the lower print layer 130 of the card(s) 102. The indicia can include identifying information (e.g., a person's name, a company name, an account number, a photograph, an image, etc.) or other information. The upper print layer and the lower print layer may be formed of polyethylene terephthalate (PET). The upper print layer and the lower print layer may be formed of biobased polycarbonate film. The upper print layer 122 and the lower print layer 130 may be formed of pre-impregnated print base paper.

The upper and lower print layer may also can include one or more optical features of the card. For example, one or more metal sheets bodies, or the like, can be included in and/or added to one or more of the upper or lower print layers to form a reflective feature, a diffractive feature, security and/or an opaque feature of the card.

The card may also include an upper resin-impregnated printable paper layer 124 and a lower resin-impregnated printable layer 128. The upper and lower biobased resin impregnated printable paper layers may be opaque, translucent, or transparent. The resin may include a biobased resin. The rein may include a petroleum-based resin. For example, the resin may be a resin that is 40% - 70% biobased resin with the remainder of the resin a petroleum-based resin.

The card includes a core 126. The core may be formed of a resin-impregnated paper. The resin may include a biobased resin. The resin may also include a petroleum-based resin. For example, the resin may be a resin that is 40% - 70% biobased resin with the remainder of the resin a petroleum-based resin. The core may be formed as a split core by providing the core as multiple thin layers or sheets. The paper and/or the impregnated resin of the core may include high-density particles 134 to increase the weight of the card, which can be desirable for higher end or luxury transactional cards, without having to include metal layers within the sheet assembly 100 or the cards 102. This can prevent the sheet assembly 100 and each of the cards 102 from forming, having, or including a conductive layer that conducts ESD or other electric current through the sheet assembly 100 or the card(s) 102. Optionally, other layers of the card may have high density particles provided in one or more of the paper or resin.

The high-density particles are inorganic particles. The inorganic particles 134 may include optionally one or more of bismuth vanadate, optionally one or more metal oxide pigments, or according to the invention one or more conductive particles (e.g., copper particles, bronze particles, etc.). While the inorganic particles may include metal, metal oxides, or other conductive particles, the inorganic particles are according to the invention separated from each other by the paper and/or the biobased resin such that no conductive pathway exists through the sheet assembly 100 and/or cards 102 from one edge or any other edge via the inorganic particles.

The sheet assembly 100 may continuously extend from a first edge 104 to an opposite second edge 106 and may continuously extend from a third edge 108 (that intersects both the first edge 104 and the second edge 106) to an opposite fourth edge 110 (that intersects both the first edge 104 and the second edge 106). Each of the cards 102 similarly may continuously extend from a first edge 112 to an opposite second edge 114 and may continuously extend from a third edge 116 (that intersects both the first edge 112 and the second edge 114) to an opposite fourth edge 118 (that intersects both the first edge 112 and the second edge 114). The absence of a conductive layer, sheet, core, or body in the sheet assembly 100 and in each of the cards 102 can prevent the sheet assembly 100 from conducting ESD or other electric current from one sheet edge 104, 106, 108, 110 to any other sheet edge 104, 106, 108, 110 and can prevent each of the cards 102 from conducting ESD or other electric current from one card edge 112, 114, 116, 118 to any other card edge 112, 114, 116, 118.

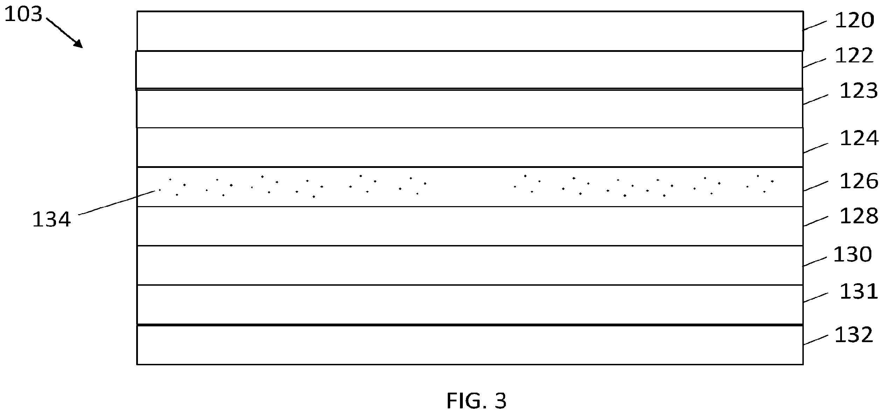

Referring to FIG. 3, a card 103 according to one embodiment may include an upper clear overlay layer 120, a lower clear overlay layer 132, an upper print layer 122, a lower print layer 130, an upper resin-impregnated printable paper layer 124, a lower resin-impregnated printable paper layer 128, and a core 126, as described above with respect to FIG. 2. The card 103 may also include an upper biobased film 123 between the upper resin-impregnated printable paper layer and the upper print layer 122. The upper film 123 may be a non-biobased film. The upper biobased film may be a biobased polycarbonate. The card 103 may also include a lower biobased film 130 between the lower resin-impregnated printable paper layer 128 and the lower print layer 131. The lower biobased film may be a biobased polycarbonate. The lower film 130 may be a non-biobased film.

One or more of the upper and lower biobased films may include metallized, holographic, diffractive, refractive, color shifting, and/or security features.

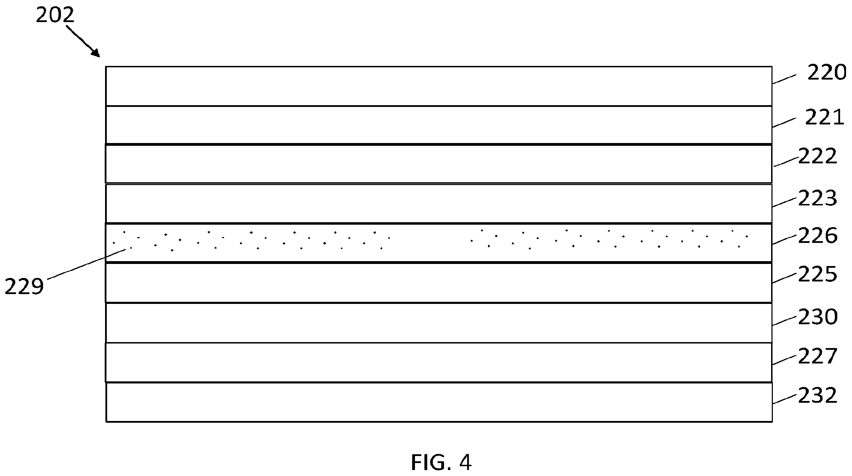

Referring to FIG. 4, a card 202 according to one embodiment may include an upper clear overlay layer 220 and a lower clear overlay layer 232. The upper and lower clear overlay layers may be formed of a polymer. In another embodiment the upper and lower clear overlay layers may be formed of paper impregnated with a resin. The resin may include a biobased resin. The resin may also include a petroleum-based resin. For example, the resin may be a resin that is 40% - 70% biobased resin with the remainder of the resin a petroleum-based resin. The resin may be a thermoset resin. The resin may be a thermoplastic resin. The paper may be a phenolic paper. The paper may be impregnated up to about 50% with biobased resin. The paper may be impregnated with less than about 50% of resin including petroleum-based resin. Other resins that may be used to impregnate the paper include melamine, formaldehyde, and phenolic resins.

The card may further include an upper print layer 222 and a lower print layer 230. The upper print layer and the lower print layer may be formed from a material that is capable of being printed upon by inks to form indicia on a visible surface (e.g., top or front surface) of the upper print layer and a visible surface (e.g., bottom or back surface) of the lower print layer of the card(s). The indicia can include identifying information (e.g., a person's name, a company name, an account number, a photograph, an image, etc.) or other information. The upper print layer and the lower print layer may be formed of PET. The upper print layer and the lower print layer may be formed of biobased polycarbonate film. The upper print layer and the lower print layer may be formed of pre-impregnated print base paper. The upper print layer and the lower print layer may be opaque, translucent, or transparent.

The upper print layer and the lower print layer may be attached to the upper clear overlay layer and the lower clear overlay layer, respectively, by an upper adhesive layer 221 and a lower adhesive layer 227. Optionally, the card may not include the upper and lower adhesive layers and the clear overlay layers may be attached to the print layers by applying heat and pressure to the layers of the card during a manufacturing process.

The card includes a core 226. The core may be formed of a resin-impregnated paper. The resin may include a biobased resin. The resin may also include a petroleum-based resin. For example, the resin may be a resin that is 40% - 70% biobased resin with the remainder of the resin a petroleum-based resin. The core may be formed as a split core by providing the core as multiple thin layers or sheets. The paper and/or the impregnated resin of the core may include high-density particles 229 to increase the weight of the card, which can be desirable for higher end or luxury transactional cards, without having to include metal layers within the sheet assembly or the cards. This can prevent the sheet assembly and each of the cards from forming, having, or including a conductive layer that conducts ESD or other electric current through the sheet assembly or the card(s). Optionally, other layers of the card may have high density particles provided in one or more of the paper or resin.

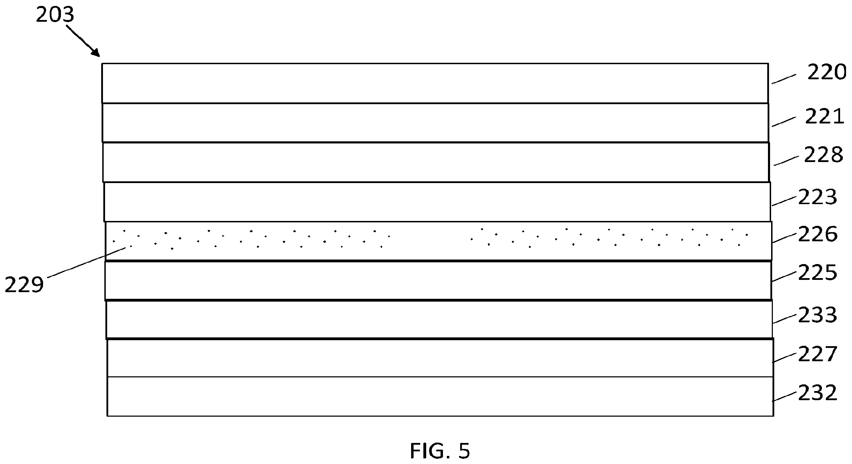

Referring to FIG. 5, a card 203 according to one embodiment may include an upper clear overlay layer 220 and a lower clear overlay layer 232. The upper and lower clear overlay layers may be formed of a polymer. In another embodiment the upper and lower clear overlay layers may be formed of paper impregnated with a resin. The resin may include a biobased resin. The resin may also include a petroleum-based resin. For example, the resin may be a resin that is 40% - 70% biobased resin with the remainder of the resin a petroleum-based resin. The resin may be a thermoset resin. The resin may be a thermoplastic resin. The paper may be a phenolic paper. The paper may be impregnated up to about 50% with biobased resin. The paper may be impregnated with less than about 50% of resin including petroleum-based resin. Other resins that may be used to impregnate the paper include melamine, formaldehyde, and phenolic resins. The card may further include an upper film 228 that may be a biobased film. The upper biobased film may be attached to the upper clear overlay layer by an adhesive 221. The upper biobased film may be a biobased polycarbonate. The upper biobased film may also include metallized, holographic, diffractive, refractive, color shifting, and/or security features. The upper film may be a non-biobased film.

The card may further include a lower film 233 that may be a biobased film. The lower biobased film may be attached to the lower clear overlay layer by an adhesive layer 227. The lower biobased film may be a biobased polycarbonate. The lower biobased film may also include metallized, holographic, diffractive, refractive, color shifting, and/or security features.

The card may further include ink forming a print layer on one or more of the upper film 228 or the lower film 233. The upper print layer and the lower print layer may be formed from a material that is capable of being printed upon by inks to form indicia on a visible surface (e.g., top or front surface) of the upper print layer and a visible surface (e.g., bottom or back surface) of the lower print layer of the card(s). The indicia can include identifying information (e.g., a person's name, a company name, an account number, a photograph, an image, etc.) or other information.

The card includes a core 226. The core may be formed of a resin-impregnated paper. The resin may include a biobased resin. The resin may also include a petroleum-based resin. For example, the resin may be a resin that is 40% - 70% biobased resin with the remainder of the resin a petroleum-based resin. The core may be formed as a split core by providing the core as multiple thin layers or sheets. The paper and/or the impregnated resin of the core may include high-density particles 229 to increase the weight of the card, which can be desirable for higher end or luxury transactional cards, without having to include metal layers within the sheet assembly or the cards. This can prevent the sheet assembly and each of the cards from forming, having, or including a conductive layer that conducts ESD or other electric current through the sheet assembly or the card(s). Optionally, other layers of the card may have high density particles provided in one or more of the paper or resin. The upper film 228 may be attached to the core 226 by an adhesive layer 223 and the lower film 233 may be attached to the core 226 by an adhesive layer 225.

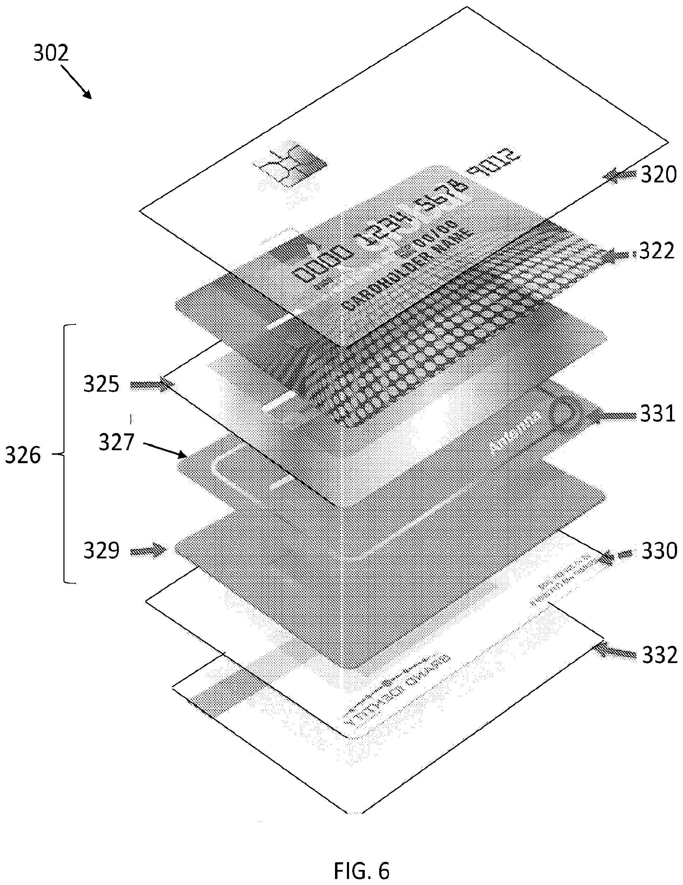

Referring to FIG. 6, a card 302 according to one embodiment may include an upper clear overlay layer 320 and a lower clear overlay layer 332. The upper and lower clear overlay layers may be formed of paper impregnated with a resin. The resin may a biobased resin. The resin may also include petroleum-based resin. For example, the resin may be a resin that is 40% - 70% biobased resin with the remainder of the resin a petroleum-based resin. The resin may be a thermoset resin. The resin may be a thermoplastic resin. The paper may be a phenolic paper. The paper may be impregnated up to about 50% with a biobased resin. The paper may be impregnated with less than about 50% of resin including a petroleum-based resin. Other resins that may be used to impregnate the paper include melamine, formaldehyde, and phenolic resins.

The card may further include an upper print layer 322 and a lower print layer 330. The upper print layer and the lower print layer may be formed from a material that is capable of being printed upon by inks to form indicia on a visible surface (e.g., top or front surface) of the upper print layer and a visible surface (e.g. bottom or back surface) of the lower print layer of the card(s). The indicia can include identifying information (e.g., a person's name, a company name, an account number, a photograph, an image, etc.) or other information. The upper print layer and the lower print layer may be formed of PET. The upper print layer and the lower print layer may be formed of biobased polycarbonate film. The upper print layer and the lower print layer may be formed of pre-impregnated print base paper.

The upper print layer and the lower print layer may be attached to the upper clear overlay layer and the lower clear overlay layer. In one embodiment, the upper clear overlay layer and the lower clear overlay layer may be attached to the upper and lower print layers by applying heat and pressure to the layers of the card during a manufacturing process.

The card includes a core 326. The core may include an upper core layer 325, a middle core layer 327, and a lower core layer 329. The core may include one or more optical features of the card. For example, one or more metal sheets bodies, or the like, can be included in and/or added to the upper core layer, the middle core layer, and/or the lower core layer to form a reflective feature, a diffractive feature, and/or a holographic feature of the card. As described above, the core layers may be formed of a resin-impregnated paper. The paper and/or the impregnated resin of one or more of the core layers may include high-density particles to increase the weight of the card, which can be desirable for higher end or luxury transactional cards, without having to include metal layers within the sheet assembly or the cards. This can prevent the sheet assembly and each of the cards from forming, having, or including a conductive layer that conducts ESD or other electric current through the sheet assembly or the card(s). Optionally, other layers of the card may have high density particles provided in one or more of the paper or resin.

The core may include one or more inlays 331, such as an electronic circuit or antenna, in one or more of the core layers, between two of the core layers, and/or between one or more core layers and the print layers. In the illustrated embodiment, the inlay is disposed within the middle core layer. The inlay can represent a radio frequency identification (RFID) antenna that can be used to receive and/or communicate electromagnetic signals via electromagnetic waves responsive to being interrogated by an RFID reader. For example, the circuit inlay can be used for contactless or wireless transactions involving the card.

As described below, one or more additional layers, sheets, or components may be included in the sheet assembly and/or placed on the sheets prior to or after the cards are cut from the sheet assembly to complete manufacture of the cards. The core of the sheet assembly and the cards may provide for increased weight of the cards (which can be desirable for higher end or luxury transactional cards) without having to include metal layers within the sheet assembly or the cards. This can prevent the sheet assembly and each of the cards from forming, having, or including a conductive layer that conducts ESD or other electric current through the sheet assembly or the card(s).

After cutting the card from the sheet assembly, one or more inks may be printed, transferred, or otherwise deposited onto the upper and/or lower print layer. These inks can form text, numbers, images, or the like, for use in identifying a holder of the card, identifying a financial institution, identifying an account, or the like. Optionally, the inks can form graphics or the like. While the inks may be shown in the drawings as a continuous layer extending over the print layers, alternatively the inks may only cover part, but not all, of the upper and/or lower print layer.

The upper and/or lower clear overlay layer can be printed or deposited over the inks to protect the inks from removal from the upper and/or lower print layer. For example, a clear overlay layer can be provided on and over the upper print layer and/or the lower print layer. This clear overlay layer can be provided on and over the print layer with heat and pressure or with an adhesive between the clear overlay layer and the print layer.

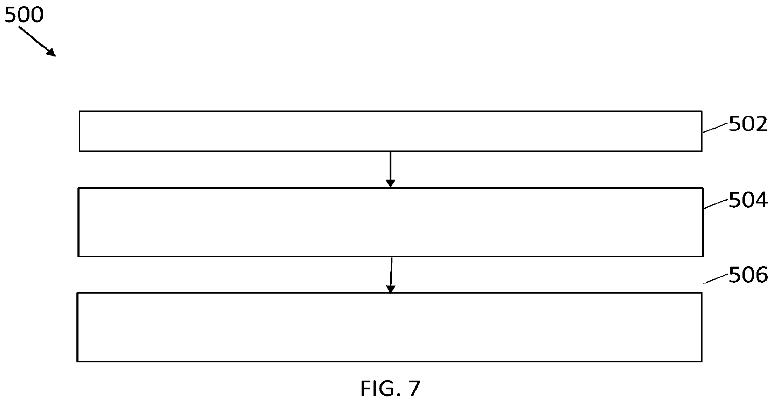

Figure 7 illustrates a flowchart of a method 500 for forming a sheet assembly that can be cut into smaller cards according to one embodiment. The method 500 can represent the operations performed to create the sheet assembly 100 that is cut into the cards 102, 202, 302. At 502, a core is formed from paper impregnated with resin. The resin may be a biobased resin. A biobased resin may be a resin formed from renewable or biological resources. A biobased resin may be a resin that is not petroleum-based. Optionally, the paper and/or the resin may include high density particles that may be inorganic particles. The inorganic particles may include optionally one or more of bismuth vanadate, optionally one or more metal oxide pigments, or according to the invention one or more conductive particles (e.g., copper particles, bronze particles, etc.). The core may also be provided with an inlay, such as an RFID antenna. The core may also comprise one or more layers of paper impregnated with resin.

At 504, an upper layer is coupled to the core. The upper layer may be a paper impregnated with resin. The rein may include a biobased resin. The resin may also include a petroleum-based resin. The upper layer may be coupled to the core by heat and pressure. The resin in the upper layer and the core may react to heat and pressure to self-glue the layers together. The upper layer may be formed of PET, a biobased polycarbonate film, or a pre-impregnated print base paper. The upper layer can receive a first printing of first indicia for one or more cards, as described above. For example, the inks may be printed on the upper sheet by the card manufacturer or producer. The upper layer may also be provided with a reflective feature, a diffractive feature, security and/or an opaque feature of the card.

At 506, a lower layer is coupled to the core to form a sheet assembly of the upper layer, the core, and the lower layer. The lower layer can be coupled with the core with the core disposed between the upper layer and the lower layer. The lower layer may be formed of the same material as the upper layer and like the upper layer, the lower layer can receive a second printing of second indicia for the one or more cards. The lower layer may also be provided with a reflective feature, a diffractive feature, security and/or an opaque feature of the card.

The sheet assembly may be provided with an upper clear overlay layer and a lower overlay clear layer to form a card(s) that may be cut out of the sheet assembly. The clear overlay layers may be a polymer or a paper impregnated with a resin. The resin may be a petroleum-based resin or a non-biodegradable resin. The clear upper and lower clear overlay layers may be coupled to the respective upper layer and lower layer by heat and pressure, or by adhesive.

In one embodiment, a sheet assembly is provided that can be cut into one or more cards. The sheet assembly includes an upper layer configured to receive a first printing of first indicia for the one or more cards. The sheet assembly may also include a core coupled with the upper layer and a lower layer configured to receive a second printing of second indicia for the one or more cards. The lower layer may be coupled with the core with the core disposed between the upper sheet and the lower sheet. One or more of the upper layer, the core, or the lower layer may be formed from paper impregnated with a resin that includes a biobased resin.

The singular forms "a", "an", and "the" include plural references unless the context clearly dictates otherwise. "Optional" or "optionally" means that the subsequently described event or circumstance may or may not occur, and that the description may include instances where the event occurs and instances where it does not. Approximating language, as used herein throughout the specification and claims, may be applied to modify any quantitative representation that could permissibly vary without resulting in a change in the basic function to which it may be related. Accordingly, a value modified by a term or terms, such as "about," "substantially," and "approximately," may be not to be limited to the precise value specified. In at least some instances, the approximating language may correspond to the precision of an instrument for measuring the value.

This written description uses examples to disclose the embodiments, including the best mode, and to enable a person of ordinary skill in the art to practice the embodiments, including making and using any devices or systems and performing any incorporated methods. The claims define the patentable scope of the disclosure, and include other examples that occur to those of ordinary skill in the art.

## Claims

1. A sheet assembly (100) configured to be cut into one or more cards (102, 202, 203, 302), the sheet assembly comprising:
an upper layer (122, 124, 222, 322) configured to receive a first printing of first indicia for the one or more cards;
a core (126, 226, 326) coupled with the upper layer; and
a lower layer (128, 130, 230, 330)
configured to receive a second printing of second indicia for the one or more cards, the lower layer coupled with the core with the core disposed between the upper layer and the lower layer, wherein one or more of the upper layer, the core, or the lower layer is formed from paper impregnated with a resin that comprises a biobased resin,
**characterised in that** one or more of the paper or the resin of the one or more of the upper layer, the core, or the lower layer includes high-density inorganic particles (134, 229) including one or more conductive particles,
wherein the inorganic particles are separated from each other by the paper and/or the biobased resin such that no conductive pathway exists through the sheet assembly.

2. The sheet assembly according to claim 1, wherein the inorganic particles include one or more of bismuth vanadate, metal oxide pigments, copper particles or bronze particles.

3. The sheet assembly of any one of claims 1-2, wherein the core i (326) is formed from at least an upper core (325) layer, a middle core layer (327), and a lower core layer (329) with the upper core layer located between the middle core layer and the upper layer and the lower core layer located between the middle core layer and the lower layer, and one or both of the upper core layer or the lower core layer includes one or more of a reflective feature, a diffractive feature, or a holographic feature, optionally further comprising an inlay (331) disposed on the middle core layer between the upper core layer and the lower core layer, the inlay including a radio frequency identification antenna.

4. The sheet assembly of any one of claims 1-3, further comprising an upper biobased film and a lower biobased film, for example, biobased polycarbonate films, and one or more of the upper biobased film and the lower biobased film comprise one or more of a metallized, holographic, diffractive, refractive, color shifting, or security feature.

5. The sheet assembly of any one of claims 1-4, further comprising:
an upper clear overlay layer (120, 220, 320) provided over the upper layer; and
a lower clear overlay layer (132, 232, 332) provided over the lower layer, wherein one or more of the upper clear overlay layer or the lower clear overlay layer are formed of a biobased polymer or a paper impregnated with a resin that comprises a biobased resin.

6. A method (500) comprising:
forming (502) a core;
coupling (504) an upper layer to the core, the upper layer configured to receive a first printing of first indicia for one or more cards; and
coupling (506) a lower layer to the core to form a sheet assembly of the upper layer, the core, and the lower layer, the lower layer coupled with the core with the core disposed between the upper layer and the lower layer, the lower layer configured to receive a second printing of second indicia for the one or more cards,
wherein the sheet assembly is configured to be cut into one or more cards,
wherein one or more of the upper layer, the core, or the lower layer is formed from paper impregnated with a resin that comprises a biobased resin,
wherein one or more of the paper or the resin of the one or more of the upper layer, the core, or the lower layer includes high-density inorganic particles including one or more conductive particles, wherein the inorganic particles are separated from each other by the paper and/or the biobased resin such that no conductive pathway exists through the sheet assembly.

7. The sheet assembly of claim 1 or the method of claim 6, wherein the resin further comprises a petroleum-based resin.

8. The sheet assembly of claim 1 or the method of claim 6, wherein the resin is 40% to 70% biobased resin with a remainder petroleum-based resin.

9. The method of any one of claims 6-8, wherein the inorganic particles include one or more of bismuth vanadate, metal oxide pigments, copper particles or bronze particles.

10. The sheet assembly of any one of claims 1-2 or the method of any one of claims 6-9, wherein the upper layer, the core, and the lower layer continuously extend from a first edge of the sheet assembly to an opposite second edge of the sheet assembly, and the upper layer, the core, and the lower layer continuously extend from a third edge of the sheet assembly to an opposite fourth edge of the sheet assembly with each of the third edge and the fourth edge continuously extending from the first edge to the second edge,
wherein the sheet assembly does not conduct electric current from any of the first edge, the second edge, the third edge, or the fourth edge to any of the first edge, the second edge, the third edge, or the fourth edge.

11. The method of any of claims 6-10, wherein forming the core includes forming at least an upper core layer and a lower core layer with the upper core layer located between the lower core layer and the upper layer and the lower core layer located between the upper core layer and the lower layer, wherein one or both of the upper core layer or the lower core layer includes one or more of a reflective feature, a diffractive feature, or a holographic feature, optionally wherein forming the core includes forming an upper core layer, a lower core layer, and an inlay disposed between the upper core layer and the lower core layer, the inlay including a radio frequency identification antenna, further optionally further comprising providing an upper biobased film between the upper layer and the core and providing a lower biobased film between the core and the lower layer, wherein the upper biobased film and the lower biobased films are biobased polycarbonate films, and one or more of the upper biobased film and the lower biobased film comprise one or more of a metallized, holographic, diffractive, refractive, color shifting, or security feature.

12. The method of any one of claims 6-11, further comprising:
providing an upper clear overlay layer over the upper layer; and
providing a lower clear overlay layer over the lower layer, wherein one or more of the upper clear overlay layer or the lower clear overlay layer are formed of a biobased polymer or a paper impregnated with a resin that comprises a biobased resin.

13. The method of any one of claims 6-12, further comprising cutting the sheet assembly to form a card, wherein the card is one or more of a financial transaction card, an identity card, an access card, a key card, or a security card, or forming a laminate from the sheet assembly, wherein the laminate comprises one or more of a countertop, a tabletop, a furniture covering, or flooring.

14. A card made from the sheet assembly of any one of claims 1-5, 7, 8 or 10, wherein the card is one or more of a financial transaction card, an identity card, an access card, a key card, or a security card.

15. A laminate comprising the sheet assembly of any one of claims 1-5, 7, 8 or 10, wherein the laminate forms one or more of a countertop, a tabletop, a furniture covering, or flooring.

## Patentansprüche

1. Folienanordnung (100), die dazu konfiguriert ist, in eine oder mehrere Karten (102, 202, 203, 302) geschnitten zu werden, wobei die Folienanordnung aufweist:
eine obere Schicht (122, 124, 222, 322), die dazu konfiguriert ist, einen ersten Druck von ersten Zeichen für die eine oder die mehreren Karten aufzunehmen;
einen Kern (126, 226, 326), der mit der oberen Schicht gekoppelt ist; und
eine untere Schicht (128, 130, 230, 330), die dazu konfiguriert ist, einen zweiten Druck von zweiten Zeichen für die eine oder die mehreren Karten aufzunehmen, wobei die untere Schicht mit dem Kern gekoppelt ist, wobei der Kern zwischen der oberen Schicht und der unteren Schicht angeordnet ist, wobei eine oder mehrere der oberen Schicht, dem Kern oder der unteren Schicht aus Papier gebildet ist, das mit einem Harz imprägniert ist, das ein biobasiertes Harz aufweist,
**dadurch gekennzeichnet, dass** das Papier oder das Harz der einen oder mehreren der oberen Schicht, des Kerns oder der unteren Schicht hochdichte anorganische Partikel (134, 229) enthält, darunter ein oder mehrere leitfähige Partikel, wobei die anorganischen Partikel durch das Papier und/oder das biobasierte Harz voneinander getrennt sind, sodass kein leitfähiger Pfad durch die Folienanordnung besteht.

2. Folienanordnung nach Anspruch 1, wobei die anorganischen Partikel eines oder mehrere von Wismutvanadat, Metalloxidpigmenten, Kupferteilchen oder Bronzeteilchen enthalten.

3. Folienanordnung nach einem der Ansprüche 1 bis 2, wobei der Kern (326) aus mindestens einer oberen Kernschicht (325), einer mittleren Kernschicht (327) und einer unteren Kernschicht (329) gebildet ist, wobei die obere Kernschicht zwischen der mittleren Kernschicht und der oberen Schicht und die untere Kernschicht zwischen der mittleren Kernschicht und der unteren Schicht angeordnet ist, und wobei eine oder beide der oberen oder der unteren Kernschicht ein oder mehrere von einem reflektierenden Merkmal, einem Beugungsmerkmal oder einem holografischen Merkmal enthalten, und wobei optional ferner eine Einlage (331) aufweist, die auf der mittleren Kernschicht zwischen der oberen Kernschicht und der unteren Kernschicht angeordnet ist, wobei die Einlage eine Antenne zur Radiofrequenzidentifikation enthält.

4. Folienanordnung nach einem der Ansprüche 1 bis 3, die ferner eine obere biobasierte Folie und eine untere biobasierte Folie, beispielsweise biobasierte Polycarbonatfolien, aufweist, und eine oder mehrere der oberen und unteren biobasierten Folien ein oder mehrere von metallisierten, holografischen, diffraktiven, refraktiven, farbverändernden oder Sicherheitsmerkmalen aufweisen.

5. Folienanordnung nach einem der Ansprüche 1 bis 4, ferner aufweisend:
eine obere klare Überzugsschicht (120, 220, 320), die über der oberen Schicht bereitgestellt ist; und
eine untere klare Überzugsschicht (132, 232, 332), die über der unteren Schicht bereitgestellt ist, wobei eine oder mehrere der oberen klaren Überzugsschicht oder der unteren klaren Überzugsschicht aus einem biobasierten Polymer oder einem Papier gebildet sind, das mit einem Harz imprägniert ist, das ein biobasiertes Harz aufweist.

6. Verfahren (500) aufweisend:
Bilden (502) eines Kerns;
Koppeln (504) einer oberen Schicht mit dem Kern, wobei die obere Schicht konfiguriert ist, einen ersten Druck von ersten Zeichen für eine oder mehrere Karten aufzunehmen; und
Koppeln (506) einer unteren Schicht mit dem Kern, um eine Folienanordnung der oberen Schicht, des Kerns und der unteren Schicht zu bilden, wobei die untere Schicht mit dem Kern gekoppelt ist, wobei der Kern zwischen der oberen Schicht und der unteren Schicht angeordnet ist, wobei die untere Schicht konfiguriert ist, einen zweiten Druck von zweiten Zeichen für die eine oder die mehreren Karten aufzunehmen,
wobei die Folienanordnung konfiguriert ist, in eine oder mehrere Karten geschnitten zu werden,
wobei eine oder mehrere der oberen Schicht, des Kerns oder der unteren Schicht aus Papier gebildet ist, das mit einem Harz imprägniert ist, das ein biobasierendes Harz aufweist,
wobei eines oder mehrere des Papiers oder des Harzes der einen oder mehreren der oberen Schicht, des Kerns oder der unteren Schicht hochdichte anorganische Partikel einschließlich eines oder mehrerer leitfähiger Partikel enthalten, wobei die anorganischen Partikel durch das Papier und/oder das biobasierende Harz voneinander getrennt sind, sodass kein leitfähiger Pfad durch die Folienanordnung existiert.

7. Folienanordnung nach Anspruch 1 oder Verfahren nach Anspruch 6, wobei das Harz ferner ein Harz auf Erdölbasis aufweist.

8. Folienanordnung nach Anspruch 1 oder Verfahren nach Anspruch 6, wobei das Harz 40 % bis 70 % biobasiertes Harz mit einem Rest eines erdölbasierten Harzes ist.

9. Verfahren nach einem der Ansprüche 6 bis 8, wobei die anorganischen Partikel eines oder mehrere von Wismutvanadat, Metalloxidpigmenten, Kupferteilchen oder Bronzeteilchen enthalten.

10. Folienanordnung nach einem der Ansprüche 1 bis 2 oder Verfahren nach einem der Ansprüche 6 bis 9, wobei sich die obere Schicht, der Kern und die untere Schicht kontinuierlich von einer ersten Kante der Folienanordnung zu einer gegenüberliegenden zweiten Kante der Folienanordnung erstrecken und sich die obere Schicht, der Kern und die untere Schicht kontinuierlich von einer dritten Kante der Folienanordnung zu einer gegenüberliegenden vierten Kante der Folienanordnung erstrecken, wobei sich sowohl die dritte Kante als auch die vierte Kante kontinuierlich von der ersten Kante zu der zweiten Kante erstrecken,
wobei die Folienanordnung keinen elektrischen Strom von einer der ersten Kante, der zweiten Kante, der dritten Kante oder der vierten Kante zu einer der ersten Kante, der zweiten Kante, der dritten Kante oder der vierten Kante leitet.

11. Verfahren nach einem der Ansprüche 6 bis 10, wobei das Bilden des Kerns das Bilden mindestens einer oberen Kernschicht und einer unteren Kernschicht enthält, wobei die obere Kernschicht zwischen der unteren Kernschicht und der oberen Schicht und die untere Kernschicht zwischen der oberen Kernschicht und der unteren Schicht angeordnet ist, wobei eine oder beide der oberen Kernschicht oder der unteren Kernschicht ein oder mehrere von einem reflektierenden Merkmal, einem diffraktiven Merkmal oder einem holografischen Merkmal enthalten, wobei das Bilden des Kerns optional das Bilden einer oberen Kernschicht, einer unteren Kernschicht und einer zwischen der oberen Kernschicht und der unteren Kernschicht angeordneten Einlage enthält, wobei die Einlage eine Antenne zur Radiofrequenzidentifikation enthält, und optional ferner das Bereitstellen einer oberen biobasierten Folie zwischen der oberen Schicht und dem Kern und das Bereitstellen einer unteren biobasierten Folie zwischen dem Kern und der unteren Schicht aufweist, wobei die obere biobasierte Folie und die unteren biobasierten Folien biobasierte Polycarbonatfolien sind und eine oder mehrere der oberen biobasierten Folie und der unteren biobasierten Folie ein oder mehrere von metallisierten, holografischen, diffraktiven, refraktiven, farbverändernden oder Sicherheitsmerkmalen aufweisen.

12. Verfahren nach einem der Ansprüche 6 bis 11, das ferner Folgendes aufweist:
Bereitstellen einer oberen klaren Überzugsschicht über der oberen Schicht; und
Bereitstellen einer unteren klaren Überzugsschicht über der unteren Schicht, wobei eine oder mehrere der oberen klaren Überzugsschicht oder der unteren klaren Überzugsschicht aus einem biobasierten Polymer oder einem Papier gebildet sind, das mit einem Harz imprägniert ist, das ein biobasiertes Harz aufweist.

13. Verfahren nach einem der Ansprüche 6 bis 12, ferner aufweisend das Schneiden der Folienanordnung, um eine Karte zu bilden, wobei die Karte eine oder mehrere von einer Finanztransaktionskarte, einer Ausweiskarte, einer Zugangskarte, einer Schlüsselkarte oder einer Sicherheitskarte ist, oder Bilden eines Laminats aus der Folienanordnung, wobei das Laminat eine oder mehrere von einer Arbeitsplatte, einer Tischplatte, einer Möbelabdeckung oder einem Bodenbelag aufweist.

14. Karte, die aus der Folienanordnung nach einem der Ansprüche 1 bis 5, 7, 8 oder 10 hergestellt ist, wobei die Karte eine oder mehrere von einer Finanztransaktionskarte, einer Ausweiskarte, einer Zugangskarte, einer Schlüsselkarte oder einer Sicherheitskarte ist.

15. Laminat, aufweisend die Folienanordnung nach einem der Ansprüche 1 bis 5, 7, 8 oder 10, wobei das Laminat eine oder mehrere von einer Arbeitsplatte, Tischplatte, Möbelabdeckung oder eines Bodenbelags bildet.

## Revendications

1. Ensemble de feuilles (100) configuré pour être découpé en une ou plusieurs cartes (102, 202, 203, 302), l'ensemble de feuilles comprenant :
une couche supérieure (122, 124, 222, 322) configurée pour recevoir une première impression de premiers indices pour les une ou plusieurs cartes ;
un noyau (126, 226, 326) couplé à la couche supérieure ; et
une couche inférieure (128, 130, 230, 330) configurée pour recevoir une deuxième impression de deuxièmes indices pour les une ou plusieurs cartes, la couche inférieure étant couplée au noyau avec le noyau disposé entre la couche supérieure et la couche inférieure, dans lequel un ou plusieurs parmi la couche supérieure, le noyau ou la couche inférieure sont formés à partir de papier imprégné d'une résine qui comprend une résine bio-sourcée,
**caractérisé en ce qu'**un ou plusieurs parmi le papier ou la résine des un ou plusieurs parmi la couche supérieure, le noyau ou la couche inférieure comprend des particules inorganiques de haute densité (134, 229) comprenant une ou plusieurs particules conductrices, dans lequel les particules inorganiques sont séparées les unes des autres par le papier et/ou la résine bio-sourcée de telle sorte qu'aucun trajet conducteur n'existe à travers l'ensemble de feuilles.

2. Ensemble de feuilles selon la revendication 1, dans lequel les particules inorganiques comprennent un ou plusieurs parmi vanadate de bismuth, pigments d'oxyde métallique, particules de cuivre ou particules de bronze.

3. Ensemble de feuilles selon l'une quelconque des revendications 1 et 2, dans lequel le noyau (326) est formé à partir d'au moins une couche de noyau supérieur (325), une couche de noyau intermédiaire (327) et une couche de noyau inférieur (329) avec la couche de noyau supérieur située entre la couche de noyau intermédiaire et la couche supérieure et la couche de noyau inférieur située entre la couche de noyau intermédiaire et la couche inférieure, et l'une ou les deux parmi la couche de noyau supérieur ou la couche de noyau inférieur comprennent une ou plusieurs parmi une caractéristique de réflexion, une caractéristique de diffraction, ou une caractéristique holographique, facultativement comprenant en outre une incrustation (331) disposée sur la couche de noyau intermédiaire entre la couche de noyau supérieur et la couche de noyau inférieur, l'incrustation comprenant une antenne d'identification radiofréquence.

4. Ensemble de feuilles selon l'une quelconque des revendications 1 à 3, comprenant en outre un film bio-sourcé supérieur et un film bio-sourcé inférieur, par exemple des films de polycarbonate bio-sourcés, et un ou plusieurs parmi le film bio-sourcé supérieur et le film bio-sourcé inférieur comprennent une ou plusieurs parmi une caractéristique métallisée, holographique, diffractive, réfractive, de variation chromatique ou de sécurité.

5. Ensemble de feuilles selon l'une quelconque des revendications 1 à 4, comprenant en outre :
une couche de recouvrement transparent supérieur (120, 220, 320) prévue sur la couche supérieure ; et
une couche de recouvrement transparent inférieur (132, 232, 332) prévue sur la couche inférieure, dans lequel une ou plusieurs parmi la couche de recouvrement transparent supérieur ou la couche de recouvrement transparent inférieur sont formées d'un polymère bio-sourcé ou d'un papier imprégné d'une résine qui comprend une résine bio-sourcée.

6. Procédé (500) comprenant :
la formation (502) d'un noyau ;
le couplage (504) d'une couche supérieure au noyau, la couche supérieure étant configurée pour recevoir une première impression de premiers indices pour une ou plusieurs cartes ; et
le couplage (506) d'une couche inférieure au noyau pour former un ensemble de feuilles de la couche supérieure, du noyau et de la couche inférieure, la couche inférieure étant couplée au noyau avec le noyau disposé entre la couche supérieure et la couche inférieure, la couche inférieure étant configurée pour recevoir une deuxième impression de deuxièmes indices pour les une ou plusieurs cartes,
dans lequel l'ensemble de feuilles est configuré pour être découpé en une ou plusieurs cartes,
dans lequel une ou plusieurs parmi la couche supérieure, le noyau ou la couche inférieure sont formés à partir de papier imprégné d'une résine qui comprend une résine bio-sourcée,
dans lequel un ou plusieurs parmi le papier ou la résine des un ou plusieurs parmi la couche supérieure, le noyau ou la couche inférieure comprend des particules inorganiques de haute densité comprenant une ou plusieurs particules conductrices, dans lequel les particules inorganiques sont séparées les unes des autres par le papier et/ou la résine bio-sourcée de telle sorte qu'aucun trajet conducteur n'existe à travers l'ensemble de feuilles.

7. Ensemble de feuilles selon la revendication 1 ou procédé selon la revendication 6, dans lequel la résine comprend en outre une résine à base de pétrole.

8. Ensemble de feuilles selon la revendication 1 ou procédé selon la revendication 6, dans lequel la résine est constituée de 40 % à 70 % de résine bio-sourcée, le reste étant une résine à base de pétrole.

9. Procédé selon l'une quelconque des revendications 6 à 8, dans lequel les particules inorganiques comprennent un ou plusieurs parmi vanadate de bismuth, pigments d'oxyde métallique, particules de cuivre ou particules de bronze.

10. Ensemble de feuilles selon l'une quelconque des revendications 1 à 2 ou procédé selon l'une quelconque des revendications 6 à 9, dans lequel la couche supérieure, le noyau et la couche inférieure s'étend en continu depuis un premier bord de l'ensemble de feuilles jusqu'à un deuxième bord opposé de l'ensemble de feuilles, et la couche supérieure, le noyau et la couche inférieure s'étend en continu depuis un troisième bord de l'ensemble de feuilles jusqu'à un quatrième bord opposé de l'ensemble de feuilles avec chacun du troisième bord et du quatrième bord s'étendant en continu depuis le premier bord jusqu'au deuxième bord,
dans lequel l'ensemble de feuilles ne conduit pas le courant électrique depuis l'un quelconque parmi le premier bord, le deuxième bord, le troisième bord ou le quatrième bord vers l'un quelconque parmi le premier bord, le deuxième bord, le troisième bord ou le quatrième bord.

11. Procédé selon l'une quelconque des revendications 6 à 10, dans lequel la formation du noyau comprend la formation de l'au moins une couche de noyau supérieur et une couche de noyau inférieur avec la couche de noyau supérieur située entre la couche de noyau inférieur et la couche supérieure et la couche de noyau inférieur située entre la couche de noyau supérieur et la couche inférieure, dans lequel l'une ou les deux parmi la couche de noyau supérieur ou la couche de noyau inférieur comprennent une ou plusieurs parmi une caractéristique de réflexion, une caractéristique de diffraction, ou une caractéristique holographique, facultativement dans lequel la formation du noyau comprend la formation d'une couche de noyau supérieur, d'une couche de noyau inférieur et d'une incrustation disposée entre la couche de noyau supérieur et la couche de noyau inférieur, l'incrustation comprenant une antenne d'identification radiofréquence, en outre facultativement comprenant en outre la fourniture d'un film bio-sourcé supérieur entre la couche supérieure et le noyau et la fourniture d'un film bio-sourcé inférieur entre le noyau et la couche inférieure, dans lequel le film bio-sourcé supérieur et les films bio-sourcés inférieurs sont des films de polycarbonate bio-sourcés, et un ou plusieurs parmi le film bio-sourcé supérieur et le film bio-sourcé inférieur comprennent une ou plusieurs parmi une caractéristique métallisée, holographique, diffractive, réfractive, de variation chromatique ou de sécurité.

12. Procédé selon l'une quelconque des revendications 6 à 11, comprenant en outre :
la fourniture d'une couche de recouvrement transparent supérieur sur la couche supérieure ; et
la fourniture d'une couche de recouvrement transparent inférieur sur la couche inférieure, dans lequel une ou plusieurs parmi la couche de recouvrement transparent supérieur ou la couche de recouvrement transparent inférieur sont formées d'un polymère bio-sourcé ou d'un papier imprégné d'une résine qui comprend une résine bio-sourcée.

13. Procédé selon l'une quelconque des revendications 6 à 12, comprenant en outre la découpe de l'ensemble de feuilles pour former une carte, dans lequel la carte est une ou plusieurs parmi une carte de transaction financière, une carte d'identité, une carte d'accès, une carte clé ou une carte de sécurité, ou la formation d'un stratifié à partir de l'ensemble de feuilles, dans lequel le stratifié comprend un ou plusieurs parmi un plan de travail, un dessus de table, une garniture de meuble ou un plancher.

14. Carte fabriquée à partir de l'ensemble de feuilles selon l'une quelconque des revendications 1 à 5, 7, 8 ou 10, dans laquelle la carte est une ou plusieurs parmi une carte de transaction financière, une carte d'identité, une carte d'accès, une carte clé ou une carte de sécurité.

15. Stratifié comprenant l'ensemble de feuilles selon l'une quelconque des revendications 1 à 5, 7, 8 ou 10, dans lequel le stratifié forme un ou plusieurs parmi un plan de travail, un dessus de table, une garniture de meuble ou un plancher.
